# EUROPÄISCHE PATENTSCHRIFT

(11) **EP 1 347 282 B1**
(45) Veröffentlichungstag und Bekanntmachung des Hinweises auf die Patenterteilung: **17.05.2006**
(21) Anmeldenummer: 03450062.9
(22) Anmeldetag: 06.03.2003
(51) Int. Cl.: G01N 1/00, G01N 35/10

(54) **Probeneingabevorrichtung für die eingabe medizinischer proben in einen analysator**
Medical sample introducing apparatus in an analyzer
Appareil d'introduction d'échantillons médicaux dans un analyseur

(30) Priorität: 19.03.2002 AT 4232002
(43) Veröffentlichungstag der Anmeldung: 24.09.2003
(73) Patentinhaber: F.HOFFMANN-LA ROCHE AG, 4070 Basel (CH)
(72) Erfinder: Rüther, Horst, Dipl.-Ing. Dr., 8047 Hart/Graz (AT); Kraker, Michael, 8411 Hengsberg (AT)
(74) Vertreter: Babeluk, Michael

(56) Entgegenhaltungen:
- EP-A- 0 297 082
- EP-A- 0 564 439
- DE-C- 3 890 175
- US-A- 4 499 053
- US-A- 5 391 499
- PATENT ABSTRACTS OF JAPAN vol. 010, no. 294 (P-504), 7. Oktober 1986 (1986-10-07) & JP 61 112967 A (HITACHI LTD), 30. Mai 1986 (1986-05-30)

## Beschreibung

Die Erfindung betrifft eine Probeneingabevorrichtung für die Eingabe medizinischer Proben, vorzugsweise Blutproben, aus unterschiedlichen Probennahmegefäßen in einen Analysator, wobei der Probentransport zwischen der Probeneingabe und den Messzellen des Analysators über gasdichte Probenleitungen erfolgt.

Derartige Eingabevorrichtungen sind beispielsweise aus dem medizinischen Laborbetrieb bekannt, wo sie beispielsweise zur Blutanalyse oder sonstigen Messungen von Körperflüssigkeiten verwendet werden. Vielfach sind Analysatoren lediglich auf eine Art der Probeneingabe spezialisiert, so dass beispielsweise deren Eingabevorrichtung die Eingabe der Probe nur mit Hilfe einer Kapillare oder einer Spritze erlauben.

Es bestand daher schon früher der Wunsch Probeneingabeeinrichtungen zu entwickeln, welche sich sowohl für die Probeneingabe mittels Kolbenspritze als auch Kapillare eigne, ohne umständliche Adaptierungsarbeiten vornehmen zu müssen.

So ist beispielsweise aus der EP 0 297 082 ein Analysengerät zur Untersuchung von Körperflüssigkeitsproben bekannt geworden, welcher eine drehbare Andockschreibe aufweist, die in unterschiedlichen Drehstellungen mit einem Einfüllstutzen der Probenzuführleitung des Analysators in Verbindung gebracht werden kann. Über diese Andockscheibe kann auch die Probe zugeführt werden, wobei diese entweder mittels einer Schlauchpumpe eingesogen oder in die Probenzuführung eingespritzt werden kann. Der Vorteil eines derartigen Probeneingabesystems besteht darin, dass ab dem Eingabeelement des Analysators sämtliche zugeführten Probe-, Kalibrier- und Reinigungsmedien innerhalb des Analysators den selben Probenweg zurücklegen und somit für alle Medien die selben Messbedingungen herrschen, im Gegensatz zu bekannten Vorrichtungen, welche für verschiedene Probennahmegefäße unterschiedliche Eingabestellen aufweisen.

Eine ähnliche Probeneingabevorrichtung wie in der EP 0 297 082 wird in der DE 38 90 175 C1 beschrieben. Bei dieser Eingabevorrichtung ist eine um eine Achse drehbar gelagerte Verteilerscheibe vorgesehen, welche mehrere im gleichen Abstand zur Drehachse angeordnete Eingabeelemente aufweist, die über entsprechende Anschlüsse mit den zuzuführenden Medien verbunden sind. Die Verteilerscheibe ist über eine Trägerwelle im Gehäuse des Analysators gelagert, welcher weiters eine Steuereinheit für die Dreh- und Hubbewegung der Verteilerscheibe beinhaltet. In einer Drehposition weist die Verteilerscheibe eine Aussparung auf, so dass in dieser Position die Probeneingabeöffnung zur Eingabe der Probe mittels Pipette oder Spritze frei liegt. Mit Hilfe der in der DE 38 90 175 C1 beschriebenen Eingabevorrichtung kann somit die Probe aus einer Kapillare eingesogen oder mit Hilfe einer Kolbenspritze eingespritzt werden, wobei zur dichtenden Aufnahme der Kapillare bzw. der Kolbenspritze eine konische Eingabeöffnung vorgesehen ist, welche über eine starre, gasdichte Leitung direkt mit den Messzellen des Analysators verbunden ist. Die Eingabevorrichtung eignet sich allerdings nicht für eine dritte in Labors bevorzugte Eingabeart, nämlich der Eingabe durch Einsaugen aus einer Kolbenspritze. Bei der beschriebenen Vorrichtung würde beim Einsaugen der Probe aus einer Kolbenspritze ein Unterdruck im Inneren der Kolbenspritze sowie im Leitungssystem des Analysators entstehen, sodass beim Entfernen der Kolbenspritze durch den plötzlichen Druckausgleich eine Fragmentierung der Probe unter Einschluss von Luftbläschen entstünde und die Messung erschwert bzw. die Messwerte verfälscht würden.

Ähnliche Probleme beim Einsaugen der Probe aus einer Kolbenspritze wären auch bei einer aus der EP 0 564 439 A2 bekannten Eingabevorrichtung zu erwarten. Für die Zufuhr von Wasch- und Referenzmedien ist hier eine um eine feststehende Achse verschwenkbare Klappe vorgesehen, über welche bei geschlossener Klappe die Wasch- und Referenzmedien einem elastischen Eingabeelement des Analysators zugeführt werden. Bei geöffneter Klappe ist das Eingabeelement für das Einsaugen aus Kapillaren bzw. das Einspritzen mittels einer Kolbenspritze frei zugängig.

Es sind allerdings auch Probeneingabevorrichtungen bekannt, mit welchen die Probe aus einer Kolbenspritze eingesogen werden kann. Dazu zählen eine Vielzahl von unterschiedlichen Eingabevorrichtungen, bei welchen eine verschwenkbare Eingabenadel vorgesehen ist, so dass in unterschiedlichen Stellungen der Nadel aus unterschiedlichen Probennahmegefäßen die Probenflüssigkeit in den Analysator gesogen werden kann. In diesem Zusammenhang sei auf die US 4,499,053 A verwiesen, welche einen mechanisch relativ komplizierten Hubmechanismus mit Kulissenführung zeigt, wobei das Einsaugen einer Probe sowohl aus einer Kapillare als auch aus einer Kolbenspritze möglich ist. Dazu weist die Eingabenadel ein Eingabeelement auf, welches mit dessen zentraler Öffnung mit Hilfe einer Kulissensteuerung auf der Eingabenadel axial geführt werden kann. Durch einen Handgriff der Kulissensteuerung kann die Eingabenadel aus einer Ruheposition, in welcher die Nadel mit einem Anschluss für eine Waschlösung verbunden ist, in mehrere unterschiedliche Positionen hochgeschwenkt werden, wobei - bedingt durch die Kulissensteuerung - das Eingabeelement unterschiedliche Positionen entlang der Achse der Eingabenadel einnimmt.

In einer der Hubpositionen ist die Nadelspitze völlig frei, so dass diese in offene Probengefäße eingetaucht werden kann und die Probe anschließend eingesogen wird. In einer weiteren Hubposition befindet sich die Nadelspitze innerhalb der zentralen Öffnung des Eingabeelementes, so dass in den freibleibenden Bereich der zentralen Öffnung eine Probenkapillare eingeschoben und dort gehalten werden kann. Die Probe kann anschließend durch die Pumpe des Analysators eingesogen werden.

Schließlich ist eine weitere Hubposition vorgesehen, in welcher die Eingabenadel eine im Wesentlichen waagrechte Stellung einnimmt und wobei das Eingabeelement ein kleines Stück der Nadelspitze freigibt. Der Konus einer Kolbenspritze kann nun über die Nadelspitze geführt und gegen die äußere Fläche des Eingabeelementes gepresst werden, wonach die Probe in den Analysator eingespritzt wird. Als Nachteil ist zu erwähnen, dass die Kolbenspritze von der Eingabevorrichtung nicht gehalten wird, dass durch die äußere Fläche des Eingabeelementes nur eine unzureichende Dichtfunktion gegeben ist und Gefahr besteht, dass Teile der Probe die Eingabeeinrichtung verunreinigen.

Ein großer Nachteil der Eingabevorrichtung gemäß US 4,499,053 A besteht allerdings darin, dass die verschwenkbare Nadel geräteseitig über einen flexiblen Schlauch mit den Messzellen in Verbindung steht und bewegliche Teile sowie flexible, gasdurchlässige Schläuche im Bereich zwischen Probeneingabe und Messzellen vermieden werden sollen.

Ähnliche Probleme mit flexiblen Leitungssystemen treten auch bei bekannten Vorrichtungen auf, bei welchen die Eingabenadel mit Hilfe einer Antriebsvorrichtung in das Innere einer Kolbenspritze geführt wird.

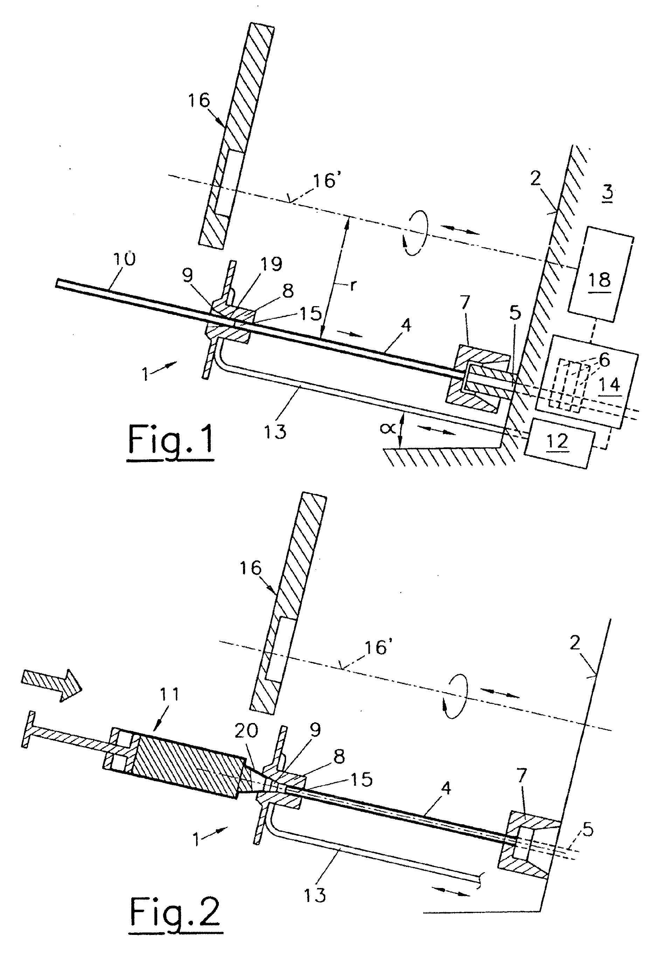

In diesem Zusammenhang wird in der US 5,391,499 A ein Eingabesystem beschrieben, bei welchem die Probeneingabe mit zwei unterschiedlichen Probennahmegefäßen, nämlich mit einer Kolbenspritze (siehe Fig. 1) oder einer Probenkapillare (siehe Fig. 2) möglich ist. Mit Hilfe eines drehbaren Elementes im Bereich der Probeneingabe kann anhand des Durchmessers des Probennahmegefäßes automatisch festgestellt werden, ob eine Kolbenspritze oder eine Probenkapillare in die Eingabeöffnung eingeführt wurde und so ein für die beiden Eingabearten unterschiedliches Eingabeprogramm gestartet werden. Dabei wird die Eingabenadel mit Hilfe einer Antriebeinheit entweder in Längsrichtung nach vorne bewegt, um in die Kolbenspritze einzudringen oder zurückgezogen, um einer Kapillare Platz zu machen. Aufgrund der in Längsrichtung verschiebbaren Eingabenadel der US 5,391,499 A ist auch ein flexibler (und damit gasdurchlässiger) Schlauch für den Anschluss an die Messzelle notwendig, was gemäß obigen Ausführungen nachteilig ist und vermieden werden soll. Ein weiterer Nachteil des Eingabesystems gemäß US 5,391,499 A besteht darin, dass damit das Einspritzen der Probe aus einer Kolbenspritze nicht möglich, da die Probe bei seitlichen Öffnungen zur Zu- und Abfuhr der Waschlösung austreten würde.

Weiters ist es bekannt, für unterschiedliche Probennahmegefäße unterschiedliche Adapter zu verwenden, welche auf das eigentliche Eingabeelement des Analysators autgesetzt oder in dieses eingeführt werden müssen. Dadurch wird allerdings der Manipulationsaufwand beträchtlich erhöht und das Risiko einer Fehlbedienung vergrößert.

Aufgabe der vorliegenden Erfindung ist es, eine Probeneingabevorrichtung für die Eingabe medizinischer Proben, vorzugsweise Blutproben, derart weiterzubilden, dass auf mechanisch möglichste einfache Weise die Probennahme aus unterschiedlichen Probennahmegefäßen möglich ist, wobei der Probentransport zwischen der Probeneingabe und den Messzellen des Analysators weiterhin über vorzugsweise starre, gasdichte Leitungen erfolgen soll.

Diese Aufgabe wird erfindungsgemäß dadurch gelöst, dass eine am Analysator probeneingangsseitig angeordnete, feststehende Eingabenadel vorgesehen ist, welche ein axial auf der Eingabenadel verschiebbares, elastisches Eingabeelement mit einer konischen Eingabeöffnung aufweist, sowie dass weiters ein in Bezug auf das Eingabeelement verlagerbares und parallel zur Eingabenadel axial verschiebbares Haltelement vorgesehen ist, welches in einer ersten Stellung das Eingabeelement frei gibt und in einer zweiten Stellung über dem Eingabeelement eine konische Öffnung zur Aufnahme einer Kolbenspritze positioniert. Vorteilhafterweise kann in der ersten Stellung des Halteelementes, in welcher die konische Eingabeöffnung des elastischen Eingabeelementes freigegeben wird, die Probe entweder aus einer Kapillare eingesogen oder mit Hilfe einer Kolbenspritze eingespritzt werden. In der zweiten Stellung, welche ausgehend von der ersten Stellung durch eine translatorische oder rotatorische Verlagerung des Halteelementes erreicht wird, dient das Halteelement zur Aufnahme der Kolbenspritze, wobei diese über der Eingabenadel positioniert und durch eine anschließende Hubbewegung des Halteelementes über die Eingabenadel geschoben wird. Anschließend kann die Probe aus dem Inneren der Kolbenspritze gesogen werden, wobei zur Vermeidung eines Unterdrucks Umgebungsluft durch den ringförmigen Spalt zwischen Eingabenadel und Spritzenkonus nachströmen kann.

Gemäß einer ersten Ausführungsvariante der Erfindung kann das Halteelement um eine im Abstand r zur Eingabenadel, parallel zu dieser ausgerichteten Drehachse drehbar gelagert sein, so dass in einer ersten Drehstellung das Eingabeelement frei liegt und in einer zweiten Drehstellung über dem Eingabeelement die konische Öffnung zur Aufnahme der Kolbenspritze positioniert wird.

Gemäß einer zweiten Ausführungsvariante kann das Halteelement als Klappe ausgebildet sein und um eine in einer Normalebene der Eingabenadel liegende Drehachse drehbar gelagert sein, so dass in einer ersten Klappstellung das Eingabeelement frei liegt und in einer zweiten Klappstellung über dem Eingabeelement die konische Öffnung zur Aufnahme der Kolbenspritze positioniert wird.

Erfindungsgemäß ist vorgesehen, dass der Analysator für die Hub- und Drehbewegung bzw. Hub- und Klappbewegung des Halteelementes eine von einer Prozessoreinheit des Analysators angesteuerte Antriebseinheit aufweist.

Eine Weiterbildung der Erfindung sieht vor, dass der Analysator für die axiale Verschiebung des elastischen Eingabeelementes von einer ersten Position im Bereich der Spitze der Eingabenadel in eine zweite Position, in welcher die Nadelspitze über das Eingabeelement hinausragt, eine von einer Prozessoreinheit des Analysators angesteuerte Antriebseinheit aufweist, welche über ein Betätigungselement mit dem elastischen Eingabeelement verbunden ist.

Eine besonders vorteilhafte Ausführungsvariante der Erfindung ist dadurch gegeben, dass das Halteelement als Verteilerscheibe für die Zufuhr von Kalibrier-, Qualitätskontroll- und/oder Waschmedien ausgebildet ist, wobei im Abstand r in weiteren Drehstellungen der Verteilerscheibe jeweils Anschlüsse für Kalibrier-, Qualitätskontroll- und/oder Waschmedien vorgesehen sind, welche mit dem Eingabeelement in Kontakt bringbar sind.

Die Erfindung wird im Folgenden anhand von Zeichnungen näher erläutert. Es zeigen die
- Fig. 1 bis 4: in zum Teil schematischer Darstellung eine erste Variante der erfindungsgemäßen Probeneingabevorrichtung für die Eingabe medizinischer Proben in einen Analysator in unterschiedlichen Betriebzuständen jeweils in einer Schnittdarstellung,
- Fig. 5: eine Draufsicht auf die Probeneingabevorrichtung nach Fig. 1 bis 4, sowie
- Fig. 6: eine weitere Ausführungsvariante der Erfindung in einer Schnittdarstellung gemäß Fig. 3.

Die in den Fig. 1 bis 5 dargestellte Ausführungsvariante einer Probeneingabevorrichtung 1 für eine durch dessen Frontplatte 2 angedeuteten Analysator 3, weist eine starre Eingabenadel 4, beispielsweise eine Stahlnadel auf, welche über eine starre, gasdichte Probenleitung 5 mit den Messzellen 6 im Analysator 3 in Verbindung steht. Die Eingabenadel 4 weist geräteseitig ein Kupplungselement 7 auf, so dass diese bei Bedarf ausgewechselt werden kann.

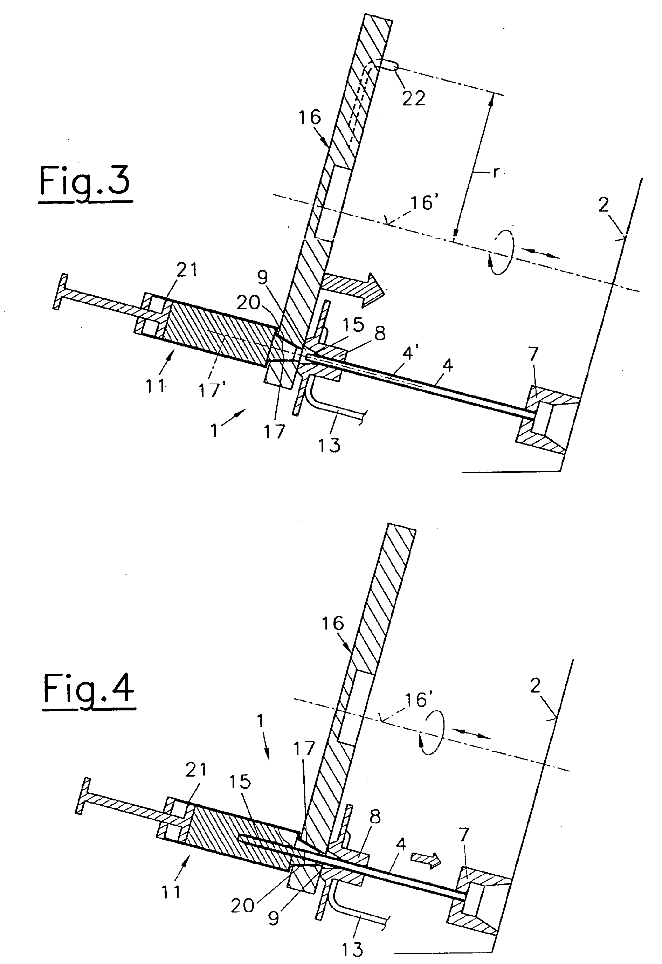

Auf der Eingabenadel 4 ist ein axial verschiebbares, elastisches Eingabeelement 8 mit einer konischen Eingabeöffnung 9 angeordnet, wobei die konische Öffnung 9 sowohl zur dichtenden Aufnahme einer Probenkapillare 10 (siehe Fig. 1) als auch des Anschlusskonus einer Kolbenspritze 11 (siehe Fig. 2) geeignet ist. Die axiale Verschiebung des Eingabeelementes 8 erfolgt über ein Betätigungselement 13 mit Hilfe einer im Analysator 3 angeordneten Antriebseinheit 12, welche von einer Prozessoreinheit 14 angesteuert wird. Die axiale Verschiebung des elastischen Eingabeelementes 8 erfolgt zwischen einer ersten Position (siehe Fig. 1 bis 3), in welcher das Eingabeelement 8 im Bereich der Spitze 15 der Eingabenadel 4 vorliegt und einer Position im mittleren Bereich der Eingabenadel 4 (siehe Fig. 4), in welcher die Spitze 15 der Nadel über das Eingabeelement 8 hinausragt.

Weiters weist die Eingabevorrichtung ein um die Achse 16' im Abstand r zur Eingabenadel 4 drehbar gelagertes, axial verschiebbares Halteelement 16 auf, welches in einer ersten Drehstellung (Fig. 1, 2 und 5), das Eingabeelement 8 für bestimmte Arten der Probeneingabe freigibt und in einer zweiten, um den Winkel β gedrehten Stellung (Fig. 3 und 4) über dem elastischen Eingabeelement 8 eine im Halteelement 16 angeordnete, konische Öffnung 17 zur Aufnahme einer Kolbenspritze 11 derart positioniert, dass die Achse 4' der starren Eingabenadel 4 mit der Achse 17' der konische Öffnung 17 zusammenfällt. Für die Hub- und Drehbewegung des Halteelementes 16 ist im Analysator 3 eine von der Prozessoreinheit 14 angesteuerte weitere Antriebseinheit 18 vorgesehen.

Die erfindungsgemäße Probeneingabevorrichtung eignet sich somit bestens für die drei bevorzugten Arten der Probeneingabe:
- Einsaugen der Probe aus Probenröhrchen mit kleinem Durchmesser, beispielsweise aus einer Probenkapillare: Die Eingabevorrichtung befindet sich dazu in dem in Fig. 1 dargestellten Betriebszustand, das heißt, das elastische Eingabeelement 8 befindet sich im Bereich der Spitze 15 der starren Eingabenadel 4 und das Halteelement 16 in seiner ersten Drehstellung, in welcher das Eingabeelement 8 für die Probeneingabe mittels Probenkapillare 10 freigegeben wird. Die Probenkapillare 10 wird nun in die konische Eingabeöffnung 9 des elastischen Eingabeelementes 8 eingeführt, bis diese in der Führungsöffnung für die Eingabenadel 4 dichtend gehalten wird. Danach wird eine nicht weiter dargestellte Pumpvorrichtung des Analysators 3 aktiviert und die Probe aus der Probenkapillare in den Analysator eingesogen. Der Einsaugvorgang kann manuell über ein Display des Analysators gestartet werden oder auch automatisch beispielsweise über weiter nicht dargestellte optische Erkennungsmittel im Bereich der Eingabeöffnung 9, welche unterschiedliche Probennahmegefäße am unterschiedlichen Durchmesser unterscheiden können.
- Einspritzen der Probe aus einer Kolbenspritze: Diese Art der Probeneingabe ist in Fig. 2 schematisch dargestellt. Die Probeneingabevorrichtung 1 befindet sich dazu in der selben Ausgangsstellung wie in Fig. 1, wobei in diesem Fall der Anschlusskonus 20 der Kolbenspritze 11 in die konische Eingabeöffnung 9 des elastischen Eingabeelementes 8 dichtend eingeführt wird, wobei anschließend durch Betätigung des Kolbens 21 die sich in der Kolbenspritze 11 befindliche Probe in den Analysator 3 eingespritzt wird. Die durch den Einspritzvorgang auf das axial verschiebbare Eingabeelement 8 ausgeübte Kraft wird durch das Betätigungselement 13 der Antriebseinheit 12 abgestützt.
- Einsaugen der Probe aus einer Kolbenspritze: Diese Art der Probeneingabe wird in den Fig. 3 und 4 dargestellt, wobei die Probeneingabeeinrichtung 1 zunächst in einer Ausgangsstellung gemäß Fig. 3 gebracht wird, in welcher das Halteelement 16 in seiner zweiten Drehstellung angeordnet ist. Dabei wird die konische Öffnung 17 des Halteelementes 16 derart über das Eingabeelement 8 positioniert, dass die Achse 4' der starren Eingabenadel 4 mit der Achse 17' der konische Öffnung 17 zusammenfällt. Danach wird die Kolbenspritze 11 mit deren Anschlusskonus 20 in die konische Öffnung des Halteelementes 16 gesteckt und dort gehalten. Nun wird gemäß Fig. 4 eine Hubbewegung sowohl des Halteelementes 16 als auch des Eingabeelementes 8 eingeleitet, mit welcher beide Teile in Richtung Frontplatte 2 des Analysators 3 bewegt werden. Durch die Hubbewegung wird die Kolbenspritze 11 über die starre Eingabenadel 4 gezogen, so dass diese in das Innere der Kolbenspritze in einen blasenfreien Bereich der dort vorliegende Probe vordringt. Wie in den Fig. 1 bis 4 dargestellt, ist die starre Eingabenadel 4 in einem Winkel α leicht schräg nach oben gerichtet und das Halteelement 16 im selben Winkel α schräg gestellt, so dass auch die Kolbenspritze 11 eine vorteilhafte Position einnimmt, um die Probe möglichst blasenfrei aus der Kolbenspritze saugen zu können. Zwischen dem Eingabeelement 8 und dem Halteelement 16 kann über einen Ringspalt zwischen Eingabenadel 4 und Anschlusskonus 20 Umgebungsluft in die Kolbenspritze 11 einströmen, um die Entstehung eines Unterdruckes während der Probenentnahme zu vermeiden. Die für diese Probeneingabeart notwendigen Hub- und Drehbewegungen können entweder manuell über ein Display (vorzugsweise Touch Screen) des Analysators oder auch automatisch durch eine - nicht weiter dargestellte - optische oder mechanische Erkennungsvorrichtung für das verwendete Probennahmegefäß eingeleitet werden.

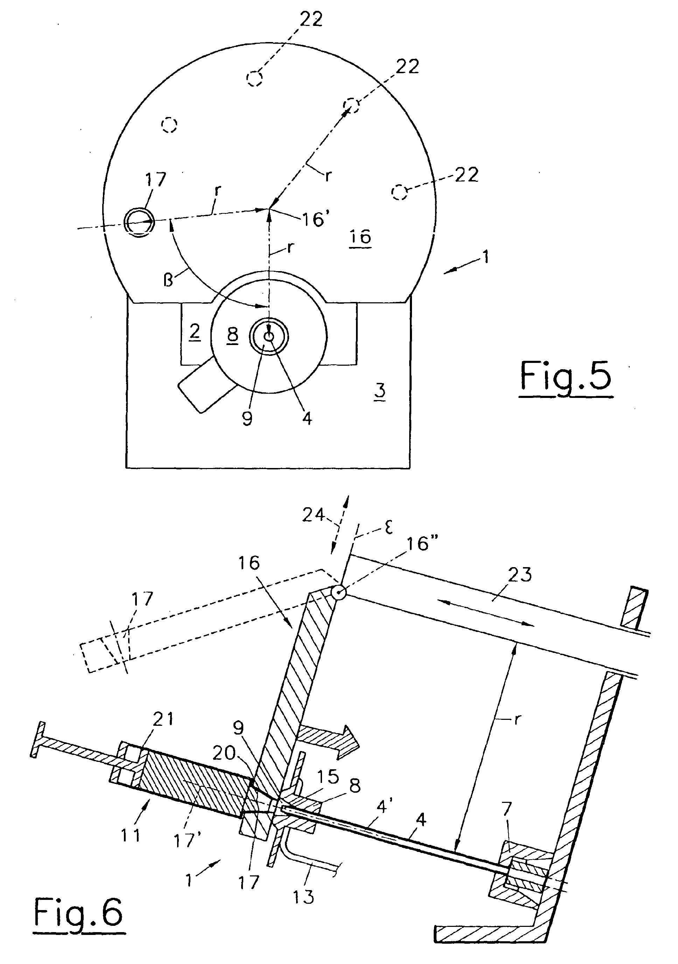

Wie in Fig. 3 bzw. 5 angedeutet kann das Halteelement 16 als Verteilerscheibe für die Zufuhr von Kalibrier-, Qualitätskontroll- und/oder Waschmedien ausgebildet sein, wobei dafür im Abstand r von der Drehachse 16' Anschlüsse 22 in weiteren Positionen an der Unterseite der Verteilerscheibe 16 angeordnet sind. Durch eine entsprechende Hub- und Drehbewegung kann jeder dieser Anschlüsse 22 in das elastische Eingabeelement 8 eingeführt werden und so das entsprechende Kalibrier-, Qualitätskontroll- und/oder Waschmedium in die Eingabenadel 4 eingesogen werden.

Bei der in Fig. 6 dargestellten Ausführungsvariante ist das Halteelement 16 als einseitig gelagerte Klappe ausgebildet. Die Drehachse 16" liegt im Abstand r in einer Normalebene ε der Eingabenadel 4 und lagert die Klappe an ein Stützelement 23, welches die notwendige Hubbewegung ausführt, um die Kolbenspritze 11 über die starre Eingabenadel 4 zu ziehen. In einer ersten Klappstellung des Halteelementes 16 (strichliert) liegt das Eingabeelement 8 für die Probeneingabe, beispielsweise aus einer Kapillare frei; in einer zweiten Klappstellung wird zur Aufnahme der Kolbenspritze 11 die konische Öffnung 17 der Klappe über das Eingabeelement 8 geklappt.

Wie in Fig. 6 mit Pfeil 24 angedeutet, kann - gemäß einer weiteren Ausführungsvariante - das Halteelement 16 auch translatorisch von einer ersten Stellung (Eingabeelement 8 frei) in eine zweite Stellung (konische Öffnung 17 über dem Eingabeelement 8) gebracht werden und anschließend eine Hubbewegung mit Hilfe des Stützelementes 23 durchgeführt werden.

Es ist somit gewährleistet, dass die Probe bei allen bevorzugten Arten der Probeneingabe sowie auch alle Kalibrier-, Qualitätskontroll- und Waschmedien den selben Analysenweg zurücklegen.

## Patentansprüche

1. Probeneingabevorrichtung (1) für die Eingabe medizinischer Proben, vorzugsweise Blutproben, aus unterschiedlichen Probennahmegefäßen (10, 11) in einen Analysator (3), wobei der Probentransport zwischen der Probeneingabe und den Messzellen (6) des Analysators (3) über gasdichte Probenleitungen (5) erfolgt, wobei eine am Analysator (3) probeneingangsseitig angeordnete, feststehende Eingabenadel (4) vorgesehen ist, welche ein axial auf der Eingabenadel (4) verschiebbares, elastisches Eingabeelement (8) mit einer konischen Eingabeöffnung (9) aufweist, sowie weiters ein in Bezug auf das Eingabeelement (8) verlagerbares und parallel zur Eingabenadel (4) axial verschiebbares Haltelement (16) vorgesehen ist, welches in einer ersten Stellung das Eingabeelement (8) frei gibt und in einer zweiten Stellung über dem Eingabeelement (8) eine konische Öffnung (17) zur Aufnahme einer Kolbenspritze (11) positioniert.

2. Probeneingabevorrichtung (1) nach Anspruch 1, **dadurch gekennzeichnet, dass** das Halteelement (16) um eine im Abstand r zur Eingabenadel (4) parallel zu dieser ausgerichteten Drehachse (16') drehbar gelagert ist und in einer ersten Drehstellung das Eingabeelement (8) frei gibt sowie in einer zweiten Drehstellung über dem Eingabeelement (8) die konische Öffnung (17) zur Aufnahme der Kolbenspritze (11) positioniert.

3. Probeneingabevorrichtung (1) nach Anspruch 2, **dadurch gekennzeichnet, dass** das Halteelement (16) als Verteilerscheibe für die Zufuhr von Kalibrier-, Qualitätskontroll- und/oder Waschmedien ausgebildet ist, wobei im Abstand r in weiteren Drehstellungen der Verteilerscheibe jeweils Anschlüsse (22) für Kalibrier-, Qualitätskontroll- und/oder Waschmedien vorgesehen sind, welche mit dem Eingabeelement (8) in Kontakt bringbar sind.

4. Probeneingabevorrichtung (1) nach Anspruch 1, **dadurch gekennzeichnet, dass** das Halteelement (16) als Klappe ausgebildet ist und um eine in einer Normalebene der Eingabenadel (4) liegende Drehachse (16") drehbar gelagert ist und in einer ersten Klappstellung das Eingabeelement (8) frei gibt sowie in einer zweiten Klappstellung über dem Eingabeelement (8) die konische Öffnung (17) zur Aufnahme der Kolbenspritze (11) positioniert.

5. Probeneingabevorrichtung (1) nach einem der Ansprüche 1 bis 4, **dadurch gekennzeichnet, dass** der Analysator (3) für die Hub- und Drehbewegung bzw. Hub- und Klappbewegung des Halteelementes (16) eine von einer Prozessoreinheit (14) des Analysators (3) angesteuerte Antriebseinheit (18) aufweist.

6. Probeneingabevorrichtung (1) nach einem der Ansprüche 1 bis 5, **dadurch gekennzeichnet, dass** der Analysator (3) für die axiale Verschiebung des elastischen Eingabeelementes (8) von einer ersten Position im Bereich der Spitze (15) der Eingabenadel (4) in eine zweite Position, in welcher die Nadelspitze (15) über das Eingabeelement (8) hinausragt, eine von einer Prozessoreinheit (14) des Analysators (3) angesteuerte Antriebseinheit (12) aufweist, welche über ein Betätigungselement (13) mit dem elastischen Eingabeelement (8) verbunden ist.

## Claims

1. Sample entry device (1) for delivering medical samples, preferably blood samples, from diverse sample containers (10, 11) to an analyzer (3), sample transfer between sample intake and measuring cells (6) of the analyzer (3) taking place via gas-tight sample lines (5), wherein a fixed intake needle (4) is provided at the entry side of the analyzer (3), which includes an elastic intake element (8) that is axially slideable on the intake needle (4) and has a conical intake opening (9), and wherein a holding element (16) is provided, which is axially slideable parallel to the intake needle (4) and can be shifted relative to the intake element (8), and which in a first position exposes the intake element (8) and in a second position places a conical opening (17) above the intake element (8) to accommodate a syringe (11).

2. Sample entry device (1) according to claim 1, **characterized in that** the holding element (16) is rotatably pivoted on an axle (16') running parallel to the intake needle (4) at a distance r, such that in a first rotational position the intake element (8) is exposed while in a second rotational position the conical opening (17) holding the syringe (11) is positioned above the intake element (8).

3. Sample entry device (1) according to claim 2, **characterized in that** the holding element (16) is configured as a distributor disk for the supply of calibrating, quality control and/or cleaning media, fittings (22) for calibrating, quality control and/or cleaning media being provided in further rotational positions of the distributor disk at a distance r, which fittings (22) may be brought into contact with the intake element (8).

4. Sample entry device (1) according to claim 1, **characterized in that** the holding element (16) is configured as a flap and may be rotatably pivoted on an axle (16") situated in a plane orthogonal to the intake needle (4), such that in a first position of the flap the intake element (8) is exposed while in a second position of the flap the conical opening (17) holding the syringe (11) is positioned above the intake element (8).

5. Sample entry device according to any of claims 1 to 4, **characterized in that** the analyzer (3) has a driving unit (18) for the lifting and rotatory motions, respectively the lifting and tilting motions of the holding element (16), which driving unit (18) is controlled by the processor unit (14) of the analyzer (3).

6. Sample entry device according to any of claims 1 to 5, **characterized in that** the analyzer (3) has a driving unit (12) controlled by the processor unit (14) of the analyzer (3), for the axial shifting of the elastic intake element (8) from a first position near the tip (15) of the intake needle (4) to a second position in which the needle tip (15) projects beyond the intake element (8), the driving unit (12) being coupled to the elastic intake element (8) via a linking element (13).

## Revendications

1. Dispositif d'introduction d'échantillons (1) pour l'introduction d'échantillons médicaux, de préférence des échantillons de sang, à partir de différents récipients de prélèvement d'échantillons (10, 11) dans un analyseur (3), le transport d'échantillons entre l'introduction d'échantillons et les cellules de mesure (6) de l'analyseur (3) s'effectuant au moyen de conduites d'échantillons (5) étanches au gaz, une aiguille d'introduction (4) fixe et disposée sur l'analyseur (3) côté entrée d'échantillons, laquelle présente un élément d'introduction (8) élastique, étant déplaçable axialement sur l'aiguille d'introduction (4) avec une ouverture d'introduction (9) conique, et également un élément de retenue (16) déplaçable par rapport à l'élément d'introduction (8) et coulissant axialement parallèlement à l'aiguille d'introduction (4) étant prévu, lequel libère l'élément d'introduction (8) dans une première position et positionne une ouverture (17) conique pour le logement d'une seringue d'injection (11) dans une seconde position au-dessus de l'élément d'introduction (8).

2. Dispositif d'introduction d'échantillons (1) selon la revendication 1, **caractérisé en ce que** l'élément de retenue (16) est logé de façon à pouvoir tourner autour d'un axe de rotation (16') orienté à la distance r de l'aiguille d'introduction (4) parallèlement à celle-ci et libère l'élément d'introduction (8) dans une première position de rotation et positionne l'ouverture (17) conique pour le logement de la seringue d'injection (11) dans une seconde position de rotation au-dessus de l'élément d'introduction (8).

3. Dispositif d'introduction d'échantillons (1) selon la revendication 2, **caractérisé en ce que** l'élément de retenue (16) est conçu comme un disque répartiteur pour l'arrivée de fluides d'étalonnage, de contrôle de qualité et/ou de lavage, des raccordements (22) pour des fluides d'étalonnage, de contrôle de qualité et/ou de lavage étant prévus respectivement à la distance r dans d'autres positions de rotation du disque répartiteur, lesquels fluides peuvent être mis en contact avec l'élément d'introduction (8).

4. Dispositif d'introduction d'échantillons (1) selon la revendication 1, **caractérisé en ce que** l'élément de retenue (16) est conçu comme clapet et logé de façon à pouvoir tourner autour d'un axe de rotation (16") situé dans un plan normal de l'aiguille d'introduction (4) et libère l'élément d'introduction (8) dans une première position de clapet et positionne l'ouverture (17) conique pour le logement de la seringue d'injection (11) dans une seconde position de clapet au-dessus de l'élément d'introduction (8).

5. Dispositif d'introduction d'échantillons (1) selon l'une quelconque des revendications 1 à 4, **caractérisé en ce que** l'analyseur (3) présente pour le mouvement de levage et de rotation ou le mouvement de levage et de relèvement de l'élément de retenue (16) une unité d'entraînement (18) commandée par une unité centrale (14) de l'analyseur (3).

6. Dispositif d'introduction d'échantillons (1) selon l'une quelconque des revendications 1 à 5, **caractérisé en ce que** l'analyseur (3) présente, pour le déplacement axial de l'élément d'introduction (8) élastique d'une première position dans la zone de pointe (15) de l'aiguille d'introduction (4) à une seconde position, dans laquelle la pointe d'aiguille (15) dépasse de l'élément d'introduction (8), une unité d'entraînement (12) actionnée par une unité centrale (14) de l'analyseur (3) et est reliée par un élément d'actionnement (13) à l'élément d'introduction (8) élastique.
